# EUROPEAN PATENT SPECIFICATION

(11) **EP 2 725 939 B1**
(45) Date of publication and mention of the grant of the patent: **15.08.2018**
(21) Application number: 12771979.7
(22) Date of filing: 14.04.2012
(51) Int. Cl.: A46B 5/00

(54) **COSMETIC APPLICATION METHOD**
KOSMETISCHE APPLIKATIONSMETHODE
MÉTHODE D'APPLICATION DE PRODUITS COSMÉTIQUES

(30) Priority: 14.04.2011 US 201113087212
(43) Date of publication of application: 07.05.2014
(73) Proprietor: Worth Beauty, LLC, Richmond, VA 23229 (US)
(72) Inventor: MARTIN, Carol, Atlanta, GA 30309 (US); HARRIS, Art, Atlanta, GA 30309 (US)
(74) Representative: Gray, James
(86) International application number: PCT/US2012/033703
(87) International publication number: WO 2012/142545

(56) References cited:
- CH-A5- 663 148
- US-A- 4 189 801
- US-A1- 2004 168 700
- US-A1- 2007 186 946
- US-A1- 2009 025 746
- US-A1- 2009 272 395
- US-A1- 2010 172 688
- US-A1- 2010 186 771
- US-A1- 2010 239 352
- US-A1- 2010 300 474
- US-B1- 7 695 207
- US-B2- 7 481 592

## Description

### BACKGROUND

The efficient and uniform application of cosmetics such as face makeup ordinarily requires some degree of training, practice, and control. Professional makeup artists learn specific techniques and train for years to acquire the skills necessary to create a desired appearance. In salons or at home, the ability to apply and blend liquid and powder cosmetics evenly has a direct impact on the subject's appearance.

Uniform application and precise blending are particularly challenging for those who are not trained makeup artists. Applicators of various kinds have been used over the years with limited success, from manual techniques such as using the bare fingertips, to handheld tools such as sponges, pencils, rollers, and brushes. A known applicator kit is disclosed in US2004/0168700, which relates to a cosmetic brush set with interchangeable handles. Existing applicators often fail to provide satisfactory uniformity, control, and blending precision.

### SUMMARY

A method of facilitating the application of makeup to a user's body, according to claim 1 is provided.

### BRIEF DESCRIPTION OF THE DRAWINGS

Having thus described various embodiments in general terms, reference will now be made to the accompanying drawings, which are not necessarily drawn to scale, and wherein:
FIG. 1 is an illustration of a motorized handheld applicator assembly.
FIG. 2 is an illustration of a motorized brush support and a plurality of cosmetic brushes.
FIG. 3 is an illustration of a surface area of the human body (i.e., the face) that is designated to receive a cosmetic, divided into zones.

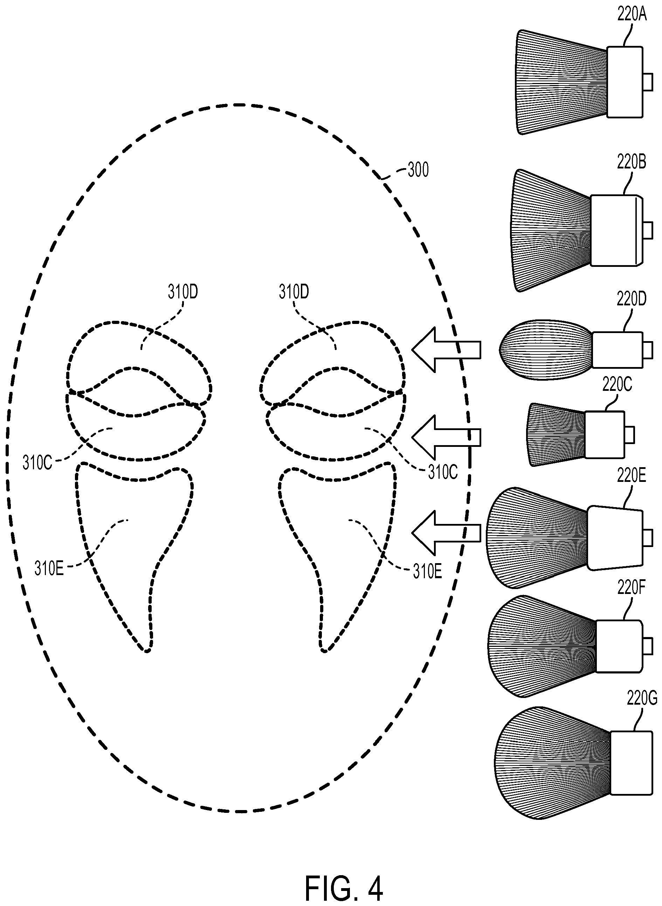

FIG. 4 is an illustration of: (1) the surface area of the human body (i.e., the face) shown in FIG. 3; and (2) the plurality of cosmetic brushes shown in FIG. 2. As in FIG. 3, the surface area is divided into zones. FIG. 4 shows, for example: (1) that an upper eyelid shadow brush 220D is particularly suited for use in an upper eyelid zone 310D; (2) that an under-eye concealer brush 220C is particularly suited for use in an under-eye zone 310C; and (3) that a blush blaster brush 220E is particularly suited for use in an "S Zone" 310E on the user's face.

### DETAILED DESCRIPTION

Various embodiments of the present invention will now be described more fully hereinafter with reference to the accompanying drawings, in which various embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like numbers refer to like elements throughout.

A makeup application kit includes a handheld applicator assembly 100 that includes a motorized applicator support (e.g., a motorized brush support 105) and an applicator 200 (e.g., a makeup brush). In particular, the applicator 200 is mounted adjacent (e.g., to) the end of the applicator support, and the motorized applicator support is adapted to selectively rotate the applicator at least substantially about the applicator's central axis. This allows the applicator to move in a smooth, rotational motion while the user is applying makeup or other cosmetics of any suitable kind to the skin. The applicator assembly is particularly useful in allowing users to uniformly apply makeup, and other cosmetics, to specific portions of their face. During this process, the applicator assembly may be used to blend (e.g., substantially evenly blend) multiple cosmetics together. However, the applicator may also be used to apply substances to other portions of the user's body. For example, the applicator may be used to uniformly apply suntan lotion, bronzer, or any other cosmetic or medical preparation (or any other suitable substance) to a user's arms, legs, feet, neck, or other body parts.

A handheld applicator assembly system, includes a set of detachable and interchangeable cosmetic brushes for applying a cosmetic to a surface area of the user's body, such as their face. A cosmetic for a surface area such as the face may include any of a variety of different compounds, such as liquids, creams, gels, powders, and the like. These compounds may be tinted with color, suffused with decorative additives such as glitter or colored powder, and/or infused with nourishing or therapeutic compounds such as sunscreen.

Each of the cosmetic brushes may be customized in size, shape and stiffness to facilitate the application and blending of a cosmetic across one or more specified zones on the user's body. For example, a zone near the eyes may benefit from a cosmetic brush that is relatively small in size, rounded in shape, and soft in stiffness. In particular, each of the cosmetic brushes is adapted to be selectively attached to, and detached from, the motorized rotating brush support discussed above. In particular, this may allow users to use a single base device in conjunction with multiple specialized brushes and cosmetics to apply the appropriate makeup to each individual zone of their face (or other body part) using a makeup, brush, and application technique that have each been customized and/or specifically selected for that particular zone.

In particular, the rotating brush support is a motorized handheld tool having a handle, a motor, and a head assembly that includes a coupling assembly for releasably receiving any of the cosmetic brushes. The motor may include a drive shaft connected to the head assembly for rotating the attached brush during use. The system may also be used without power, as a manual brush.

The makeup application kit includes detailed instructions (e.g., in the form of electronic or printed materials, computer software, and/or one or more videos) for instructing a user how to use the kit's various components (for example, using the techniques described below).

### Exemplary Handheld Applicator Assembly

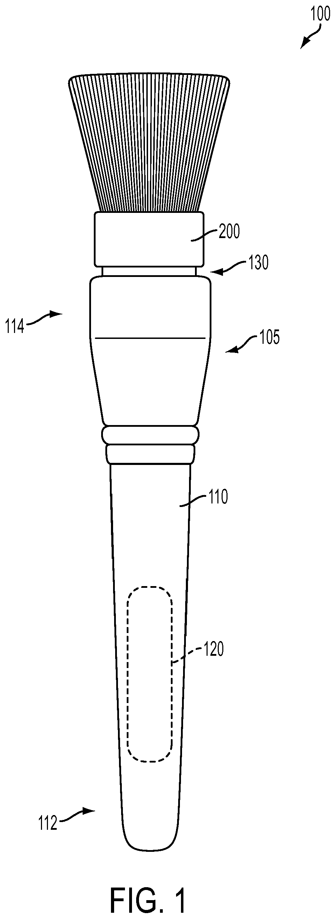

As shown in FIG. 1, the handheld applicator assembly 100 includes a motorized applicator support (e.g., a motorized brush support 105) and an applicator 200 (e.g., a makeup brush). In particular embodiments, the applicator 200 is mounted adjacent (e.g., to) the end of the applicator support and the motorized applicator support is adapted to selectively rotate the applicator at least substantially about the applicator's central axis.

In particular, the motorized applicator support comprises a handle 110 and a head assembly 130 for receiving an applicator 200. The handle 110 has a proximal end 112 and a distal end 114. The proximal end 112 is closer to the user when the applicator assembly 100 is in use. The handle 110 may include an interior chamber. The handle 110 may be elongated in shape, as shown, extending lengthwise along a central axis toward both the distal end 114 and the head assembly 130. The handle 110 may be any size and shape that is comfortable to grip and otherwise suitable for grasping and maneuvering the applicator 100. The handheld applicator assembly 100 may be sized and shaped to fit easily into a carrying case, purse or other bag for portability. The various components of the handheld applicator assembly 100 may be optimized toward a minimum overall size and weight to further facilitate portability.

The head assembly 130 may be configured to receive an applicator 200. As shown, the applicator 200 mounted on the handheld applicator assembly 100 may be a cosmetic brush. In particular, the applicator 100 may be held and manipulated by a user in order to use the cosmetic brush to distribute a cosmetic across a selected surface area such as the face.

### Motor, Power Source, Drive Shaft

The handheld applicator assembly 100 may include a motor 120 and a power source, which may be located within a chamber inside the handle 110. The motor 120 may comprise any of a variety of different motor assemblies such as a typical mechanical or electromechanical motor, a cam assembly, a magnetic assembly, a sonic or ultrasonic mechanism, a vibrating motor, or any of a variety of motor assemblies known to those skilled in the art. The power source may comprise one or more cells such a cosmetic brush single-use or rechargeable batteries or, optionally, may include a cord for coupling to an electrical outlet. In one embodiment, at least a portion of the power source is mounted within the handle 110 while a recharging source is located outside the handle 110. The motor 120 may be activated by a switch mounted on the handle 110.

The motor 120 may include a drive shaft extending lengthwise toward the distal end 114 of the handle 110, where the shaft connects to the head assembly 130. The motor 120 may extend lengthwise along an axis that is substantially parallel to the central axis of the handle 110. The motor 120 and drive shaft may be configured to impart movement to the applicator 200. The movement may be rotational. The rotation may be substantially coaxial relative to the drive shaft. Alternatively, the rotation may be eccentric relative to the drive shaft, and the angle of the applicator 200 relative to the drive shaft and/or handle 110 may be selectively adjustable between, for example, an angle of about 0 and an angle of about 90 degrees to give the user the ability to personalize their brush for ease of use. The movement imparted to the applicator 200 may also include some amount of vibration, oscillation, translation in any direction, and combinations thereof. Any variety and combinations of movements may be employed in order to evenly and precisely distribute a cosmetic over a surface area of the body in a desired manner. In use, the motions of the user's hand may also impart movement to the applicator 200 in various directions. Also, the handheld applicator assembly 100 may be operated without use of the motor 120 or the power source, as a manual brush.

The motor 120, power source, switch and drive shaft may be configured to drive the applicator 200 primarily in rotation about the applicator's central axis, or about any other suitable axis. The motor 120 may be configured to rotate the applicator 200 at a single constant speed, at a variety of intermediate speeds, or at variable speeds. For example, the motor 120 may be configured to rotate the applicator 200 at a relatively slower speed when the applicator 100 is being used on a relatively delicate or fragile surface. A higher intermediate speed may be used when the applicator 100 is being used on a relatively robust or sturdy surface. In this aspect, the switch controlling the motor 120 may include a variety of intermediate speed settings or, may include a slide or other element configured to operate the motor 120 at variable speeds.

The motor 120 may vary the rotating speed of the applicator 200 based on the force exerted on the handheld applicator assembly 100. In this aspect, the more the user presses the applicator 200 against a particular surface, the more the motor 120 will vary the rotating speed of the applicator 200. For example, a particular user might use a relatively vigorous force to press the applicator 200 toward and into relatively minute features of the face, such as pores, furrows, creases, wrinkles, and the like. The motor 120 may vary the rotating speed of the applicator 200 based on the force exerted on a switch or other component located on the handheld applicator assembly 100. In this aspect, as the user pushes against or slides the switch or other component, the motor 120 will vary the rotating speed of the applicator 200.

The handheld applicator assembly 100 may include a computerized driver assembly that is programmed or otherwise configured to drive the applicator 200 through a series of predetermined rotational routines. In this aspect, the motor 120 may be automatically controlled by a computerized driver assembly in order to provide guidance to the user.

### Detachable Applicators, Coupling Assembly

As described above, the handheld applicator assembly 100 includes a head assembly 130 for receiving an applicator 200.

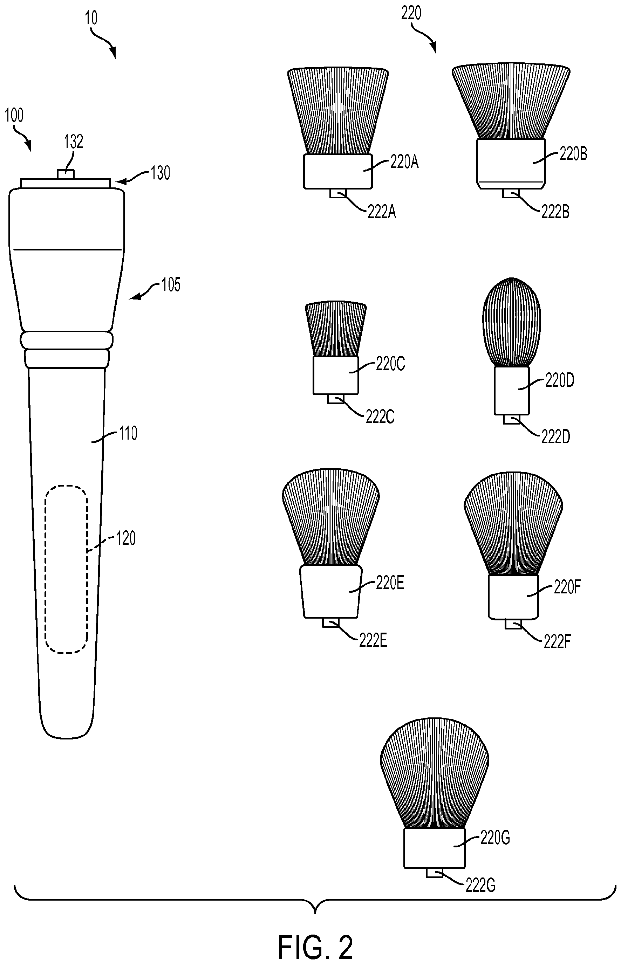

The applicator 200 may be permanently or releasably attached to a coupling assembly 132, as illustrated in FIGS. 1 and 2. The coupling assembly 132 may be configured to releasably receive an applicator 200, such that a user can manually attach and remove any of a variety of detachable applicators interchangeably. The applicator 200 may include any of a variety of tools suitable for evenly and precisely distributing a cosmetic over a surface area of the body with a desired degree of control. For example, the applicator 200 may be a soft disk, a sponge, a semi-porous pad, a brush, a roller, or the like, and any combinations thereof. The applicator 200 may be a single unit or it may be comprised of multiple components.

The coupling assembly 132 may be a bayonet-type assembly, for example, which includes a male element such as a cylinder with one or more radial pins and a female element such as a hollow cylinder with matching L-shaped slots and an internal spring that is biased to push against the male element and thereby keep the pins engaged with the slots. Bayonet mounts are sometimes used for camera lenses and automotive lamps. A bayonet mount may facilitate precise alignment, for example, between the head assembly 130 and the applicator 200. The coupling assembly 132 may be any kind of connector or fastening mechanism, such as a screw-threaded mount, a bayonet mount, a keyhole mount, a channel mount, a friction fit between mating parts, or the like. Any of a variety of coupling assemblies known to those skilled in the art may be used. The coupling assembly 132 may be configured to cushion or otherwise absorb the vibration and energy from the applicator 200 during use.

### Exemplary Applicator System

An applicator system 10, as illustrated in FIG. 2, may include a motorized brush support 105 and a set of cosmetic brushes 220 for applying a cosmetic to a surface area such as the face. The motorized brush support 100, as shown, includes a base portion (in this case, a handle 105), a head assembly 130 and a coupling assembly 132. The coupling assembly 132 may extend away from the head assembly 130, as shown, or it may be integrated within the head assembly 130. Each of the cosmetic brushes 220 may include a connector 222 for attaching to or otherwise engaging with the coupling assembly 132. The connector 222 may extend below the base of a brush, as shown, or it may be integrated within the base of the brush. The connector 222 may include any type of connector or fastening mechanism that fits or otherwise engages with the coupling assembly 132. Any of a variety of combinations of connectors 222 and coupling assemblies 132 known to those skilled in the art may be used.

Any of a variety of cosmetic brushes (such as one or more specialty makeup brushes) may be collected in a set 220 for use with any particular application. The set of cosmetic brushes 220, as illustrated, may include one or more of the following brush types: a Liquidator Brush 220A, a Powder Foundation Brush 220B, an Under-Eye Concealer Brush 220C, an Upper Eyelid Shadow Brush 220D, a Blush Blaster Brush 220E, a Disco Shine Brush 220F, and a Bronzer Brush 220G.

The Liquidator Brush 220A may be used to apply and distribute a liquid or cream foundation. The Powder Foundation Brush 220B may be used to apply and distribute a powder foundation or base. The Under-Eye Concealer Brush 220C may be used to apply and distribute a concealer compound under the eyes and other areas, as desired. The Upper Eyelid Shadow Brush 220D may be used to apply and distribute a shadow compound to the upper eyelids. The Blush Blaster Brush 220E may be used to apply and distribute a blush compound to the "S zone" or cheeks and other areas, as desired. The Disco Shine Brush 220F may be used to apply and distribute a decorative compound such as a colored powder or glitter to any area. The Bronzer Brush 220G may be used to apply and distribute a bronzing compound to any area. In use, any of the set of brushes 220 may be used to apply, distribute and blend any of these compounds to any area of the face.

The cosmetic brushes in a set 220 may include any number of different brush types. A brush may include a base, a collection of bristles, and a ferrule or other component for holding the bristles to the base. The bristles may be made of natural animal hair, synthetic fibers, or a blend. The base of the brush, in some embodiments, may be made of different materials, in various colors. The brush may include one or more words or indicia correlated to a particular manufacturer, product name, trademark, business or social cause. The set of brushes 220 may be color coded or otherwise grouped by a visible feature that indicates to the user each brush's intended use and/or its association with a particular set of brushes.

Each cosmetic brush may be characterized by its particular features; for example, its overall size and shape, the shape of its base, the ferrule type, the bristle composition (natural, synthetic or blend, for example), the bristle length, the bristle color, the shape of each bristle end (rounded or blunt, smooth or rough, for example), the overall shape made by all the bristles together (fan-shaped, cone-shaped, flat, rounded, pointed, and the like), the bristle spacing and density (measured, for example, in bristles per square inch) and the bristle stiffness (from rigid bristles like a toothbrush, to bristles as limp as cotton thread). For example, in the context of face makeup, a first cosmetic brush (such as The Liquidator Brush 220A illustrated in FIG. 2) may be relatively large in size, flat across the end of the bristles, and relatively rigid in stiffness. A second cosmetic brush (such as The Upper Eyelid Shadow Brush 220D) may be relatively small in size, rounded in shape across the end, and softer in stiffness.

### Systematic Correlation of Compound, Zone, and Brush

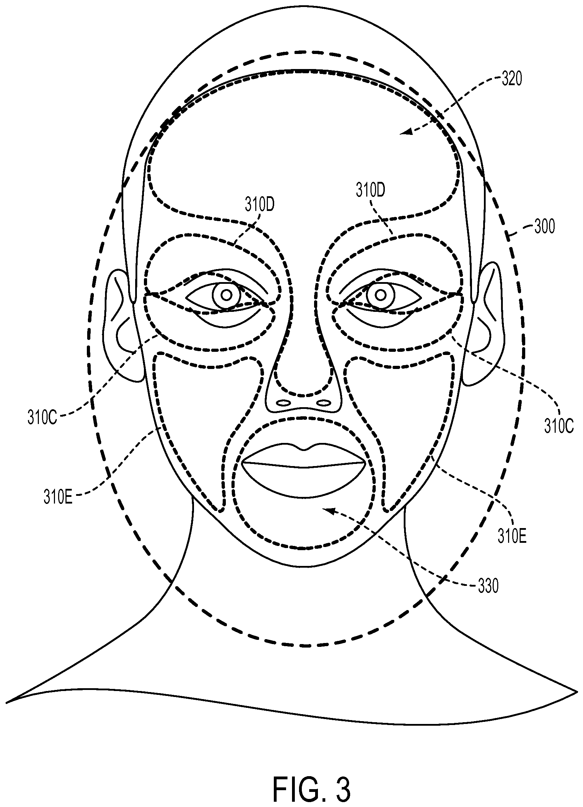

The applicator system 10, as shown in FIG. 2, may include a handheld applicator assembly 100, a plurality of different cosmetics, instructions that include a depiction of a surface area 300 of the body divided into a number of different zones (as shown in FIG. 3), and a set of cosmetic brushes 220. The cosmetic brushes may be customized in size, shape, stiffness, and/or other parameters to facilitate the application and blending of one or more of the different cosmetics into one or more of the zones of the surface area. In this respect, for example, the brush types may be correlated to both the cosmetic compound and the corresponding zone of the human face. The applicator system 10 may include a makeup application system and method which provides to the user a systematic correlation between each particular cosmetic within the applicator system and (1) each zone within a specified surface area 300 to receive the particular cosmetic, and (2) a particular cosmetic brush 220 (e.g., selected from the provided set of cosmetic brushes), that is to be used in applying the cosmetic each particular zone within the specified surface area 300.

The plurality of different cosmetics may include any number and variety of different compounds. For example, as described above in the context of face makeup, a first compound may be a liquid or cream foundation; a second compound may be a powder foundation or base; a third compound may be an under-eye concealer; a fourth compound may be an eyelid shadow; a fifth compound may be a blush; a sixth compound may be a decorative compound such as a colored powder or glitter; a seventh compound may be a bronzer; and so forth.

A surface area 300 such as the face, as illustrated in FIG. 3, may be characterized as including one or more zones, such as: (1) a "T Zone" 320 that includes the forehead and nose; (2) an upper eyelid zone 310D; (3) an under-eye zone 310C; (4) an "S Zone" 310E that includes the cheeks; (5) an "O Zone" 330 around the mouth; and (6) other peripheral zones such as the neck, the ears, the hairline, and the like.

The cosmetic brushes in a set 220 may include any number of different brush types. As described above, each cosmetic brush may be characterized by its particular features such as overall size and shape, bristle type, and stiffness. Each brush in a set of cosmetic brushes 220 may be customized in size, shape, stiffness, and other parameters to facilitate the application and blending of a selected cosmetic compound to a particular zone to receive the makeup. In some embodiments, for example, a first cosmetic brush is customized in size, shape and stiffness to facilitate the application and blending of a first compound across a first zone on a user's skin. A second brush is customized in size, shape and stiffness to facilitate the application and blending of a second compound across a second zone on a user's skin. A third brush is customized for applying and blending a third compound across a third zone on a user's skin; and so forth.

Providing an applicator system 10 that includes a systematic correlation between each compound, each zone, and each brush may provide valuable assistance to users of makeup, especially those who are not trained makeup artists. This systematic correlation may be provided to the user, for example, in a set of printed or electronic instructions.

By way of example only, the applicator system 10 may provide the following correlations between and among an exemplary set of compounds, zones and brushes, as summarized in the table below.

### COMPOUND ZONE BRUSH

Liquid Foundation Any or all zones. The Liquidator 220A
Powder Foundation Any or all zones. Powder Foundation
Brush 220B
Concealer Under-Eye Zone 310C Under-Eye Concealer
Brush 220C
Eye Shadow Upper Eyelid Zone 310D Upper Eyelid Shadow
Brush 220D
Blush "S Zone" 310E Blush Blaster 220E
Decorative Any or all zones. Disco Shine Brush 220F
Bronzer Any or all zones. The Bronzer 220G

Other combinations of compounds, zones and brushes will come to mind to those of skill in the relevant field who have the benefit of the teachings presented in this description and the associated drawings.

### Exemplary Method of Applying a Plurality of Cosmetics

The systems for applying cosmetics described above may be utilized in a method of applying a plurality of cosmetics to a user's skin according to the present invention. The provider of one or more components of a system for applying cosmetics may execute the steps in the method. In some embodiments, the user of such a system may execute the steps in the method.

The method of the present invention may include the step of providing a motorized brush support 105, such as the one illustrated in FIG. 2 and described above. The motorized brush support 105 may include a handle 110, a motor 120, a head assembly 130, and a coupling assembly 132 configured for releasably receiving a first cosmetic brush. Another step includes identifying or otherwise designating at least a first zone within a surface area on the body to receive a cosmetic, such as the face.

Another step includes designing and/or collecting or otherwise providing a set of cosmetic brushes 220, such as the set illustrated in FIG. 2. This step includes providing a first cosmetic brush, which may be customized in size, shape, stiffness and other parameters to facilitate distribution of the first compound across the first zone of the surface area to receive makeup. The provider of one or more components of a system for applying cosmetics, in some embodiments, may execute one or more additional steps that are designed to provide guidance and direction to a user. For example, another step may include directing a user to select the first cosmetic brush and mount it to the coupling assembly 132 on the handheld tool 100. Another step may include directing a user to deposit a first particular cosmetic onto the first zone. This step may be accomplished, for example, by using a cotton swab, a foam wedge, a finger, or the like, to collect the first compound from its container and deposit it onto the first zone in a desired amount. The user may also use the first cosmetic brush to accomplish this step.

Another step may include directing a user to distribute the first compound across the first zone by manipulating the handheld tool 100 against the first zone of the surface. This step may be accomplished, for example, by activating a switch on the handheld tool 100 to start the motor 120 and begin rotating the first cosmetic brush, and by pressing the brush against the areas on the first zone where the first compound has been deposited in discrete amounts (by hand or wedge, for example). In a spreading motion, the user may distribute the first compound as desired; preferably, blending the discrete deposits of first compound across the first zone in order to create an evenly blended layer. The tool 100 and first cosmetic brush may be manipulated in a spreading motion toward and into relatively minute features of the face, such as pores, furrows, creases, wrinkles, and the like. Also, the tool 100 and first cosmetic brush may be manipulated in a spreading motion toward and into the natural features of the face such as those in and around the nose, including the bridge, dorsum, lateral surfaces, alae nasi, alar furrows, nasal septum, and the philtrum. In this aspect, the rotating first cosmetic brush in some embodiments may be manipulated in order to produce: (1) an apparently even distribution of the first compound across the first zone; and, (2) an apparently even and gradually decreasing layer of the first compound around the perimeter of the first zone (for example, along the edge of the first zone, such as along the neck, at the hairline, near the lips, near the eyes, and the like).

In a further aspect, the method may include the steps of identifying a second zone within a surface area on the body, providing a second cosmetic brush customized in size, shape and stiffness to facilitate distribution of a second compound across the second zone, and directing a user to deposit and then distribute the second compound across the second zone. Similarly, the method may include identifying a third zone, providing a third brush, and directing a user to distribute a third compound; and so forth, for any number of zones.

The method of applying one or more cosmetics, as described, may result in a more efficient application of the various compounds to the area. In other words, the method may accomplish a desired result while using less makeup than other methods, such as application with manual tools and other techniques. In this aspect, however, the even distribution that may be accomplished by using the method may, in practice, result in the application of more makeup and better coverage on certain areas of the body or face.

Also, the method of applying one or more cosmetics, as described, may be more efficient in terms of the amount of manual effort required. In this aspect, for some users, the rotating applicator may accomplish the desired result with less hand and wrist movement than generally required for manual application techniques. The method may be particularly helpful for those with physical limitations due to age, disability, or mobility limitations.

In some embodiments, the user of a system for applying one or more cosmetics may execute the steps in a method, as described above, including the steps of identifying zones, selecting and mounting brushes, depositing compounds, and manipulating a tool to distribute the compounds. The steps described herein, of course, need not be performed in any particular order and may be repeated, removed and re-applied, or otherwise accomplished in any manner to achieve a desired result.

In an exemplary embodiment, a method of applying one or more cosmetics may include the step of selecting a surface area on the body to receive cosmetics; for example, the face. Another step may include identifying a first zone within the area, such as the cheeks or "S Zone" 310E and the forehead or "T Zone" 320. Another step may include selecting a first compound, such as a liquid or cream foundation, for application to the first zone. In some embodiments, for the provider of one or more components of a system for applying cosmetics, another step may include designing and/or collecting or otherwise providing a first cosmetic brush, such as the Liquidator Brush 220A shown in FIG. 2, for use in applying the first compound across the first zone. The Liquidator Brush 220A, in some embodiments, may be relatively large in size, flat across the end of the bristles, and relatively rigid in stiffness. Another step may include selecting and mounting the Liquidator Brush 220A to the coupling assembly 132 of the handheld applicator assembly 100. Another step may include depositing the liquid or cream foundation, using the fingers or a foam wedge for example, in discrete amounts across the cheeks and forehead (i.e., the first zone). Another step may include manipulating the handheld applicator assembly 100 against the cheeks and forehead by pressing the Liquidator Brush 220A against the areas where the liquid or cream foundation has been deposited. In a spreading motion, the user may distribute the liquid or cream foundation as desired; preferably, blending the liquid or cream foundation across the cheeks and forehead in order to create an evenly blended layer. The handheld applicator assembly 100 and the Liquidator Brush 220A may be manipulated in a spreading motion toward and into relatively minute features of the face and toward the edges of the cheeks and forehead. In this aspect, the method may include the step of distributing the liquid or cream foundation in a gradually decreasing layer around the perimeter of the cheeks and forehead; for example, along the neck line, at the ears, at the hairline, near the lips, near the eyes, and the like, without producing a line or an otherwise abrupt change in coverage between any two zones. This step of distributing the liquid or cream foundation across the cheeks and forehead using the Liquidator Brush 220A can be continued until a desired appearance is achieved.

In a further aspect of this exemplary embodiment, another step of the method may include identifying a second zone within the face which, in this example, may also include the cheeks or "S Zone" 310E and the forehead or "T Zone" 320. Another step may include selecting a second compound, such as a powder foundation, for application to the second zone. In some embodiments, for the provider of one or more components of a system for applying cosmetics, another step may include designing and/or collecting or otherwise providing a second cosmetic brush, such as the Powder Foundation Brush 220B shown in FIG. 2, for use in applying the powder foundation across the second zone. The Powder Foundation Brush 220B, in some embodiments, may be relatively large in size, slightly curved and fan-shaped across the end of the bristles, and somewhat less rigid in stiffness than the Liquidator Brush 220A. Another step may include selecting and mounting the Powder Foundation Brush 220B to the coupling assembly 132 of the handheld applicator assembly 100. Another step may include depositing the powder foundation, using the fingers or a foam wedge for example, in discrete amounts across the cheeks and forehead (i.e., the second zone).

Another step may include manipulating the handheld applicator assembly's applicator 200 against the cheeks and forehead by pressing the Powder Foundation Brush 220B against the areas where the powder foundation has been deposited. In a spreading motion, the user may distribute the powder foundation as desired; preferably, blending the powder foundation across the cheeks and forehead in order to create an evenly blended layer. The handheld applicator assembly 100 and the Powder Foundation Brush 220B may be manipulated in a spreading motion toward and into relatively minute features of the face and toward the edges of the cheeks and forehead. In this aspect, the method may include the step of distributing the powder foundation in a gradually decreasing layer around the perimeter of the cheeks and forehead; for example, along the neck line, at the hairline, near the lips, near the eyes, and the like, without producing a line or an otherwise abrupt change in coverage between any two zones. This step of distributing the powder foundation across the cheeks and forehead using the Powder Foundation Brush 220B can be continued until a desired appearance is achieved.

### Zones Near the Eyes

In a further aspect of this exemplary embodiment, another step of the method may include identifying a third zone within the face which, in this example, may include the under-eye zone 310C. Another step may include selecting a third compound, such as an under-eye concealer compound, for application to the under-eye zone. In some embodiments, for the provider of one or more components of a system for applying cosmetics, another step may include designing and/or collecting or otherwise providing a third cosmetic brush, such as the Under-Eye Concealer Brush 220C shown in FIG. 2, for use in applying the concealer across the under-eye zone 310C. The Under-Eye Concealer Brush 220C, in some embodiments, may be relatively small in size, gently curved across the end of the bristles, and relatively soft in stiffness.

Another step may include selecting and mounting the Under-Eye Concealer Brush 220C to the coupling assembly 132 of the handheld applicator assembly 100. Another step may include depositing the under-eye concealer, using the fingers or a foam wedge for example, in discrete amounts across the under-eye zone 310C (i.e., the third zone). Another step may include manipulating the handheld applicator assembly 100 against the under-eye zone 310C by pressing the Under-Eye Concealer Brush 220C against the areas where the concealer has been deposited. In a spreading motion, the user may distribute the concealer as desired; preferably, blending the concealer across the under-eye zone 310C in order to create an evenly blended layer. The handheld applicator assembly 100 and the Under-Eye Concealer Brush 220C may be manipulated in a spreading motion toward and into relatively minute features of the face and toward the edges of the under-eye zone 310C. In this aspect, the method may include the step of distributing the concealer in a gradually decreasing layer around the perimeter of the under-eye zone 310C; for example, near the lower eyelash and along the upper cheekbone, without producing a line or an otherwise abrupt change in coverage between any two zones. This step of distributing the concealer across the under-eye zone 310C using the Under-Eye Concealer Brush 220C can be continued until a desired appearance is achieved.

In a further aspect of this exemplary embodiment, another step of the method may include identifying a fourth zone within the face which, in this example, may include the upper eyelid zone 310D. Another step may include selecting a fourth compound, such as an eye shadow compound, for application to the upper eyelid zone. In some embodiments, for the provider of one or more components of a system for applying cosmetics, another step may include designing and/or collecting or otherwise providing a fourth cosmetic brush, such as the Upper Eyelid Shadow Brush 220D shown in FIG. 2, for use in applying the eye shadow across the upper eyelid zone 310D. The Upper Eyelid Shadow Brush 220D, in some embodiments, may be relatively small in size, highly rounded across the end of the bristles, and very soft in terms of stiffness. Another step may include selecting and mounting the Upper Eyelid Shadow Brush 220D to the coupling assembly 132 of the handheld applicator assembly 100. Another step may include depositing the eye shadow compound, using the fingers or a foam wedge, for example, in discrete amounts across the upper eyelid zone 310D (i.e., the fourth zone). Another step may include manipulating the handheld applicator assembly 100 against the upper eyelid zone 310D by pressing the Upper Eyelid Shadow Brush 220D against the areas where the eye shadow has been deposited. In a spreading motion, the user may distribute the eye shadow as desired; preferably, blending the eye shadow across the upper eyelid zone 310D in order to create an evenly blended layer. The handheld applicator assembly 100 and the Upper Eyelid Shadow Brush 220D may be manipulated in a spreading motion toward and into relatively minute features of the face and toward the edges of the upper eyelid zone 310D. In this aspect, the method may include the step of distributing the eye shadow in a gradually decreasing layer around the perimeter of the upper eyelid zone 310D; for example, near the upper eyelash, along the brow line, and near the temples without producing a line or an otherwise abrupt change in coverage between any two zones. This step of distributing the eye shadow across the upper eyelid zone 310D using the Upper Eyelid Shadow Brush 220D can be continued until a desired appearance is achieved.

### Blush, Decorative Compounds, and Bronzer

In a further aspect of this exemplary embodiment, another step of the method may include identifying a fifth zone within the face which, in this example, may include the cheeks or the "S Zone" 330. Another step may include selecting a fifth compound, such as a blush, for application to the cheeks. In some embodiments, for the provider of one or more components of a system for applying cosmetics, another step may include designing and/or collecting or otherwise providing a fifth cosmetic brush, such as the Blush Blaster Brush 220E shown in FIG. 2, for use in applying the blush across the cheeks or "S Zone" 310E. The Blush Blaster Brush 220E, in some embodiments, may be relatively large in size, rounded across the end of the bristles, and medium-soft in terms of stiffness. Another step may include selecting and mounting the Blush Blaster Brush 220E to the coupling assembly 132 of the handheld applicator assembly 100. Another step may include depositing the blush compound, using the fingers or a foam wedge for example, in discrete amounts across the cheeks (i.e., the fifth zone). Another step may include manipulating the handheld applicator assembly 100 against the cheeks by pressing the Blush Blaster Brush 220E against the areas where the eye shadow has been deposited. In a spreading motion, the user may distribute the blush as desired; preferably, blending the blush across the cheeks in order to create an evenly blended layer and without producing a line or an otherwise abrupt change in coverage or color between any two zones. This step of distributing the blush across the cheeks using the Blush Blaster Brush 220E can be continued until a desired appearance is achieved.

In a further aspect of this exemplary embodiment, another step of the method may include identifying a sixth zone within the face which, in this example, may include the temples. Another step may include selecting a sixth compound, such as a decorative compound including colored powder or glitter, for application to the temples. In some embodiments, for the provider of one or more components of a system for applying cosmetics, another step may include designing and/or collecting or otherwise providing a sixth cosmetic brush, such as the Disco Shine Brush 220F shown in FIG. 2, for use in applying the decorative compound across the temples. The Disco Shine Brush 220F, in some embodiments, may be relatively medium in size, highly rounded across the end of the bristles, and medium-soft in terms of stiffness.

Another step may include selecting and mounting the Disco Shine Brush 220F to the coupling assembly 132 of the handheld applicator assembly 100. Another step may include depositing the decorative compound, using the fingers or a foam wedge for example, in discrete amounts across the temples (i.e., the sixth zone). Another step may include manipulating the handheld applicator assembly 100 against the temples by pressing the Disco Shine Brush 220F against the areas where the decorative compound has been deposited. In a spreading motion, the user may distribute the decorative compound as desired; preferably, blending the decorative compound across the temples in order to create an evenly blended layer and without producing a line or an otherwise abrupt change in coverage or color between any two zones. This step of distributing the decorative compound across the temples using the Disco Shine Brush 220F can be continued until a desired appearance is achieved.

In a further aspect of this exemplary embodiment, another step of the method may include identifying a seventh zone within the face which, in this example, may include the cheeks or the "S Zone" 330. Another step may include selecting a seventh compound, such as a bronzer, for application to the cheeks. In some embodiments, for the provider of one or more components of a system for applying cosmetics, another step may include designing and/or collecting or otherwise providing a seventh cosmetic brush, such as the Bronzer Brush 220G shown in FIG. 2, for use in applying the bronzer across the cheeks or "S Zone" 310E. The Bronzer Brush 220G, in some embodiments, may be relatively large in size, highly rounded across the end of the bristles, and relatively soft in terms of stiffness. Another step may include selecting and mounting the Bronzer Brush 220G to the coupling assembly 132 of the handheld applicator assembly 100. Another step may include depositing the bronzer compound, using the fingers or a foam wedge for example, in discrete amounts across the cheeks (i.e., the seventh zone). Another step may include manipulating the handheld applicator assembly 100 against the cheeks by pressing the Bronzer Brush 220G against the areas where the bronzer has been deposited. In a spreading motion, the user may distribute the bronzer as desired; preferably, blending the bronzer across the cheeks in order to create an evenly blended layer and without producing a line or an otherwise abrupt change in coverage or color between any two zones. This step of distributing the bronzer across the cheeks using the Bronzer Brush 220G can be continued until a desired appearance is achieved.

In some embodiments, the user of a system for applying one or more cosmetics may execute the steps in a method, as described above, including the steps of identifying zones, selecting and mounting brushes, depositing compounds, and manipulating a tool to distribute the compounds. Any number of different users may be involved in the performance of any of the steps. The steps described herein, of course, need not be performed in any particular order and may be repeated, removed and re-applied, or otherwise accomplished in any manner to achieve a desired result.

As described above, the methods of applying one or more cosmetics may include correlating the compound, zone, and brush in order to produce a desired result. Providing a method that includes the systematic correlation between each compound, each zone, and each brush may provide valuable assistance to users of makeup, especially those who are not trained makeup artists.

### CONCLUSION

Many modifications and other embodiments of the invention will come to mind to one skilled in the art to which this invention pertains having the benefit of the teachings presented in the foregoing descriptions and the associated drawings. For example, as will be understood by one skilled in the relevant field in light of this disclosure, the invention may take form in a variety of different mechanical and operational configurations. For example, while several embodiments above include using the disclosed motorized applicator systems to apply makeup to various parts of a user's body, the motorized applicator systems may be used to apply other types of products to the user's body. Such products include, for example, suntan lotion, massage oils, erotic lotions, and medicinal products. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for the purposes of limitation.

## Claims

1. A method of facilitating the application of makeup to a user's body, said method comprising:
(A) providing a motorized brush support comprising:
a base portion;
a coupling assembly that is configured to selectively couple any particular one of a plurality of different types of makeup brushes adjacent said base portion; and
a motor for selectively rotating, at least substantially about its central axis, a makeup brush that is mounted, via said coupling assembly, adjacent said base portion;
(B) identifying a first zone on the human body;
(C) providing a first makeup brush that is suitable in size, shape and stiffness to facilitate distribution of a first type of makeup within said first zone, said first makeup brush comprising a base, a collection of bristles, and a ferrule for holding the bristles to the base, wherein said motorized brush support is adapted to rotate said first makeup brush at least substantially about the central axis of said first makeup brush while said central axis is at least substantially co-linear with a central axis of said motorized brush support (100);
(D) facilitating the application of makeup to said first zone on the user's body by directing the user to:
mount said first makeup brush to said motorized brush support via said coupling assembly;
deposit said first type of makeup onto said first zone on said user's body; and
use said brush support to rotate said first makeup brush at least substantially about its central axis; and
while said makeup brush is rotating at least substantially about its central axis, use said makeup brush to distribute said first type of makeup within said first zone on said user's body.

2. The method of Claim 1, further comprising:
(G) identifying, for said user, a second zone on the human body;
(H) providing a second makeup brush that is suitable in size, shape and stiffness to facilitate distribution of a second type of makeup within said second zone;
(I) instructing said user to mount said second makeup brush to said motorized brush support via said coupling assembly;
(J) instructing said user to deposit said second type of makeup onto said second zone on said user's body; and
(K) instructing said user to:
use said brush support to rotate said second makeup brush at least substantially about its central axis; and
while said second makeup brush is rotating at least substantially about its central axis, use said second makeup brush to distribute said second type of makeup within said second zone on said user's body.

3. The method of Claim 2, wherein:
said first zone on said user's body comprises said user's forehead and cheeks;
said first type of makeup comprises a foundation;
said second zone on said user's body comprises an area under said user's eyes; and
said second type of makeup comprises a concealer.

4. The method of Claim 2, further comprising:
(L) identifying, for said user, a third zone on the human body;
(M) providing a third makeup brush that is suitable in size, shape and stiffness to facilitate distribution of a third type of makeup within said third zone;
(N) instructing said user to select and mount said third makeup brush to said motorized brush support via said coupling assembly;
(O) instructing said user to deposit said third type of makeup onto said third zone on said user's body; and
(P) instructing said user to:
use said brush support to rotate said third makeup brush at least substantially about its central axis; and
while said third makeup brush is rotating at least substantially about its central axis, use said third makeup brush to distribute said third type of makeup within said third zone on said user's body.

5. The method of Claim 4, wherein;
said first zone on said user's body comprises said user's forehead and cheeks;
said first type of makeup comprises a foundation;
said second zone on said user's body comprises an area under said user's eyes;
said second type of makeup comprises a concealer;
said third zone on said user's body comprises said user's upper eyelids; and
said third type of makeup comprises eye shadow.

## Patentansprüche

1. Verfahren zur Erleichterung der Auftragung von Makeup auf den Körper eines Anwenders, wobei das Verfahren umfasst:
(A) Bereitstellen eines motorisierten Pinselträgers, umfassend:
einen Basisteil;
eine Kopplungsbaugruppe, die so konfiguriert ist, dass sie irgendeinen bestimmten aus einer Vielzahl von verschiedenen Typen von Schminkpinseln selektiv an den Basisteil koppelt; und
einen Motor zum selektiven Rotierenlassen eines Schminkpinsels, der über die Kopplungsbaugruppe an den Basisteil montiert ist, wenigstens im Wesentlichen um seine Mittelachse;
(B) Identifizieren einer ersten Zone auf dem menschlichen Körper;
(C) Bereitstellen eines ersten Schminkpinsels, der eine geeignete Größe, Form und Steifigkeit aufweist, um die Verteilung eines ersten Typs von Makeup innerhalb der ersten Zone zu erleichtern, wobei der erste Schminkpinsel eine Basis, eine Sammlung von Borsten und eine Ferrule, um die Borsten an der Basis zu halten, umfasst, wobei der motorisierte Pinselträger geeignet ist, den ersten Schminkpinsel wenigstens im Wesentlichen um die Mittelachse des ersten Schminkpinsels rotieren zu lassen, während die Mittelachse wenigstens im Wesentlichen kolinear mit einer Mittelachse des motorisierten Pinselträgers (100) ist;
(D) Erleichtern der Auftragung von Makeup auf die erste Zone des Körpers des Anwenders, indem man den Anwender dazu anleitet:
den ersten Schminkpinsel über die Kopplungsbaugruppe auf dem motorisierten Pinselträger zu montieren;
den ersten Typ Makeup auf der ersten Zone des Körpers des Anwenders abzuscheiden; und
den Pinselträger zu verwenden, um den ersten Schminkpinsel wenigstens im Wesentlichen um seine Mittelachse rotieren zu lassen; und
während der Schminkpinsel wenigstens im Wesentlichen um seine Mittelachse rotiert, den Schminkpinsel dazu zu verwenden, den ersten Typ von Makeup innerhalb der ersten Zone auf dem Körper des Anwenders zu verteilen.

2. Verfahren gemäß Anspruch 1, weiterhin umfassend:
(G) Identifizieren einer zweiten Zone auf dem menschlichen Körper bei dem Anwender;
(H) Bereitstellen eines zweiten Schminkpinsels, der eine geeignete Größe, Form und Steifigkeit aufweist, um die Verteilung eines zweiten Typs von Makeup innerhalb der zweiten Zone zu erleichtern;
(I) Anweisen des Anwenders, den zweiten Schminkpinsel über die Kopplungsbaugruppe auf dem motorisierten Pinselträger zu montieren;
(J) Anweisen des Anwenders, den zweiten Typ Makeup auf der zweiten Zone des Körpers des Anwenders abzuscheiden; und
(K) Anweisen des Anwenders:
den Pinselträger zu verwenden, um den zweiten Schminkpinsel wenigstens im Wesentlichen um seine Mittelachse rotieren zu lassen; und
während der zweite Schminkpinsel wenigstens im Wesentlichen um seine Mittelachse rotiert, den zweiten Schminkpinsel dazu zu verwenden, den zweiten Typ von Makeup innerhalb der zweiten Zone auf dem Körper des Anwenders zu verteilen.

3. Verfahren gemäß Anspruch 2, wobei:
die erste Zone auf dem Körper des Anwenders die Stirn und die Wangen des Anwenders umfasst;
der erste Typ von Makeup eine Foundation umfasst;
die zweite Zone auf dem Körper des Anwenders einen Bereich unter den Augen des Anwenders umfasst; und
der zweite Typ von Makeup einen Concealer umfasst.

4. Verfahren gemäß Anspruch 2, weiterhin umfassend:
(L) Identifizieren einer dritten Zone auf dem menschlichen Körper bei dem Anwender;
(M) Bereitstellen eines dritten Schminkpinsels, der eine geeignete Größe, Form und Steifigkeit aufweist, um die Verteilung eines dritten Typs von Makeup innerhalb der dritten Zone zu erleichtern;
(N) Anweisen des Anwenders, den dritten Schminkpinsel auszuwählen und über die Kopplungsbaugruppe auf dem motorisierten Pinselträger zu montieren;
(O) Anweisen des Anwenders, den dritten Typ Makeup auf der dritten Zone des Körpers des Anwenders abzuscheiden; und
(P) Anweisen des Anwenders:
den Pinselträger zu verwenden, um den dritten Schminkpinsel wenigstens im Wesentlichen um seine Mittelachse rotieren zu lassen; und
während der dritte Schminkpinsel wenigstens im Wesentlichen um seine Mittelachse rotiert, den dritten Schminkpinsel dazu zu verwenden, den dritten Typ von Makeup innerhalb der dritten Zone auf dem Körper des Anwenders zu verteilen.

5. Verfahren gemäß Anspruch 4, wobei:
die erste Zone auf dem Körper des Anwenders die Stirn und die Wangen des Anwenders umfasst;
der erste Typ von Makeup eine Foundation umfasst;
die zweite Zone auf dem Körper des Anwenders einen Bereich unter den Augen des Anwenders umfasst;
der zweite Typ von Makeup einen Concealer umfasst;
die dritte Zone auf dem Körper des Anwenders die oberen Augenlider des Anwenders umfasst; und
der dritte Typ von Makeup einen Lidschatten umfasst.

## Revendications

1. Procédé permettant de faciliter l'application d'un maquillage sur le corps d'un utilisateur, ce procédé comprenant des étapes consistant à :
(A) se procurer un support de brosse motorisé comprenant :
une partie de base,
un ensemble d'accouplement qui est réalisé pour permettre de coupler sélectivement une brosse de maquillage particulière quelconque parmi un ensemble de brosses de maquillage de différents types dans une position adjacente à la partie de base, et
un moteur permettant de faire tourner de manière sélective, au moins essentiellement autour de son axe médian, une brosse de maquillage qui est montée par l'intermédiaire de l'ensemble d'accouplement dans une position adjacente à la partie de base,
(B) identifier une première zone sur le corps humain,
(C) se procurer une première brosse de maquillage dont la dimension, la forme et la rigidité sont adaptées pour faciliter la distribution d'un premier type de maquillage dans la première zone, la première brosse de maquillage comportant une base, une série de poils et une virole permettant de maintenir les poils sur la base, le support de brosse motorisé étant susceptible de faire tourner la première brosse de maquillage au moins essentiellement autour de son axe médian cet axe médian étant au moins essentiellement colinéaire à l'axe médian du support de brosse motorisé (100),
(D) faciliter l'application du maquillage sur la première zone du corps de l'utilisateur en demandant à l'utilisateur :
de monter la première brosse de maquillage sur le support de brosse motorisé par l'intermédiaire du support d'accouplement,
de déposer le premier type de maquillage sur la première zone de son corps, et
d'utiliser le support de brosse pour faire tourner la première brosse de maquillage au moins essentiellement autour de son axe médian, et
lorsque la brosse de maquillage tourne au moins essentiellement autour de son axe médian, d'utiliser la brosse de maquillage pour distribuer le premier type de maquillage dans la première zone sur son corps.

2. Procédé conforme à la revendication 1,
comprenant en outre des étapes consistant à :
(G) identifier pour l'utilisateur une seconde zone sur le corps humain,
(H) se procurer une seconde brosse de maquillage dont la dimension, la forme et la rigidité sont adaptées pour faciliter la distribution d'un second type de maquillage dans la seconde zone,
(I) demander à l'utilisateur de monter la seconde brosse de maquillage sur le support de brosse motorisé par l'intermédiaire de l'ensemble d'accouplement,
(J) demander à l'utilisateur de déposer le second type de maquillage sur la seconde zone de son corps, et
(K) demander à l'utilisateur :
d'utiliser le support de brosse pour faire tourner la seconde brosse de maquillage au moins essentiellement autour de son axe médian, et
lorsque la seconde brosse de maquillage tourne au moins essentiellement autour de son axe médian, d'utiliser la seconde brosse de maquillage pour distribuer le second type de maquillage dans la seconde zone, sur son corps.

3. Procédé conforme à la revendication 2, selon lequel :
la première zone du corps de l'utilisateur comporte le front et les joues de l'utilisateur,
le premier type de maquillage est un fond de teint,
la seconde zone du corps de l'utilisateur est une zone située au-dessous de ses yeux, et
le second type de maquillage est un anticernes.

4. Procédé conforme à la revendication 2, comprenant en outre des étapes consistant à :
(L) identifier pour l'utilisateur, une troisième zone du corps humain,
(M) se procurer une troisième brosse de maquillage dont la dimension, la forme et la rigidité sont adaptées pour faciliter la distribution d'un troisième type de maquillage dans cette troisième zone,
(N) demander à l'utilisateur de sélectionner et de monter la troisième brosse de maquillage sur le support de brosse motorisé par l'intermédiaire de l'ensemble d'accouplement,
(O) demander à l'utilisateur de déposer le troisième type de maquillage sur la troisième zone de son corps, et
(P) demander à l'utilisateur
d'utiliser le support de brosse pour faire tourner la troisième brosse de maquillage au moins essentiellement autour de son axe médian, et
lorsque la troisième brosse de maquillage tourne au moins essentiellement autour de son axe médian d'utiliser la troisième brosse de maquillage pour distribuer le troisième type de maquillage dans la troisième zone de son corps.

5. Procédé conforme à la revendication 4,
selon lequel :
la première zone du corps de l'utilisateur comprend son front et ses joues,
le premier type de maquillage est un fond de teint,
la seconde zone du corps de l'utilisateur est une zone située au-dessous de ses yeux,
le second type de maquillage est un anticernes,
la troisième zone du corps de l'utilisateur comporte ses paupières et le troisième type de maquillage est une ombre à paupières.
